# EUROPEAN PATENT APPLICATION

(11) **EP 4 790 923 A1**
(43) Date of publication of application: **12.08.2026**
(21) Application number: 25156525.5
(22) Date of filing: 07.02.2025
(51) Int. Cl.: H04B 10/272, H04B 10/40, H04B 10/572

(54) **APPARATUS AND METHOD FOR UPSTREAM TRANSMISSION IN A COHERENT PON**

(71) Applicant: Nokia Solutions and Networks Oy, 02610 Espoo (FI)
(72) Inventor: ADIB, Md Mosaddek Hossain, 71638 Ludwigsburg (DE); BONK, Rene, 75181 Pforzheim (DE); BREYNE, Laurens, 8770 Ingelmunster (BE)
(74) Representative: Zinsinger, Norbert

(57) **Abstract**

The present invention discloses an apparatus for use by an optical network unit, ONU, communicatively connected to an Optical Line Terminal, OLT, comprising means for: configuring a first operation parameter of a first laser (Tx) to be a reference value (T_{Tx,ref}), thereby the emission frequency of the first laser (Tx) is aligned to a frequency of a downstream signal; determining a target value (T_{Tx}) of the first operation parameter of the first laser (Tx) based on: a predetermined deviation (ΔT_{Tx}=T_{Tx}-T_{Tx,ref}) between the target value (T_{Tx}) and the reference value (T_{Tx,ref}), and the reference value of the first operation parameter (T_{Tx,ref}); configuring the first operation parameter of the first laser (Tx) to be the target value, thereby the emission frequency of the first laser (Tx) is aligned to a predetermined frequency for an upstream signal; transmitting upstream signals to the OLT by modulating the output of the first laser (TX).

## Description

### Field of the invention

Various example embodiments relate to communication technology, specifically to optical network.

### Background

Conventionally, a passive optical network (PON) is based on intensity-modulation/direct detection (IM-DD) technology, because of its simple optical-frontend design and low-cost. However, with an increasing demand in the data rate of PON, it will be very challenging to design future high speed PON system based on IM-DD with rates of 200Gbit/s and beyond using a single wavelength channel because of various potential limitations.

Inphase and quadrature modulation (IQM) and coherent reception is considered as a potential solution for long-reach (e.g., >40 km) and beyond 200G-Very High Speed PON (VHSP). The IQM allows phase and amplitude modulation as well as the polarization multiplexing of an optical carrier. The coherent receiver mixes the received signal with a local reference laser, also known as local oscillator (LO), which allows to detect the phase, amplitude, and polarization modulation.

Currently, the IQM and coherent-reception based communication systems are developed for point-to-point (P2P) communication, and employ premium quality components and devices, e.g., narrow linewidth and accurately tunable and frequency stable lasers. The cost related to such components and thus the available coherent transceiver (TRx) is high.

In order to implement coherent-reception in PON, it is desired to reduce the cost of a coherent TRx.

One possible way to reduce the cost of coherent TRx is to employ low-cost fixed wavelength laser, such as distributed feedback (DFB) laser to replace for example fully calibrated external cavity laser (ECL) in a coherent TRx at the ONU side. It will allow to reduce the laser chip cost. However, there are few non-scaling costs related to the laser chip, such as, laser burn-in, testing, calibration, and characterization. Eliminating or reducing such steps may significantly reduce the non-scaling cost. However, this type of laser will introduce other problems, such as laser wavelength may vary a lot more, under the same conditions, due to fabrication tolerances and imperfections compared to the more expensive lasers that also use calibration mechanisms. Thus, wavelength alignment cannot be guaranteed with a cheap-laser e.g. DFB laser.

Furthermore, in a state-of-the-art coherent TRx design based on a fully calibrated laser, both transmit and receive signals are at the same wavelength. This state-of-the-art coherent TRx normally uses dual-fiber system, one fiber for downstream and another for upstream signal. However, the up- and the down-stream operate in the same optical fiber in the PON system. Therefore, the bidirectional operation at the same wavelength will be impaired by the Rayleigh scattering and back reflection. Thus, coherent PON will require a dual-laser (emit in two different frequency / wavelength) based TRx design, where one wavelength will be used for upstream (US), and another wavelength will be used for downstream (DS) operation.

EP24182346.7 has disclosed a way to align the LO frequency of an uncalibrated laser at the ONU to the OLT downstream frequency. It is further necessary to solve the wavelength alignment problem for upstream transmission at the ONU.

### Summary of the Invention

The invention is set out in the appended set of claims.

According to a first aspect of the invention, there is provided an apparatus for use by an optical network unit, ONU, communicatively connected to an Optical Line Terminal, OLT, comprising means for: configuring a first operation parameter of a first laser to be a reference value, thereby the emission frequency of the first laser is aligned to a frequency of a downstream signal; determining a target value of the first operation parameter of the first laser based on: a predetermined deviation between the target value and the reference value, and the reference value of the first operation parameter; configuring the first operation parameter of the first laser to be the target value, thereby the emission frequency of the first laser is aligned to a predetermined frequency for an upstream signal; transmitting upstream signals to the OLT by modulating the output of the first laser.

According to a second aspect of the invention, there is provided a method, comprising: configuring a first operation parameter of a first laser to be a reference value, thereby the emission frequency of the first laser is aligned to a frequency of a downstream signal; determining a target value of the first operation parameter of the first laser based on: a predetermined deviation between the target value and the reference value, and the reference value of the first operation parameter; configuring the first operation parameter of the first laser to be the target value, thereby the emission frequency of the first laser is aligned to a predetermined frequency for an upstream signal; transmitting upstream signals to the OLT by modulating the output of the first laser.

According to a third aspect of the invention, there is provided a computer program comprising instructions for causing an apparatus to perform at least the following: configuring a first operation parameter of a first laser to be a reference value, thereby the emission frequency of the first laser is aligned to a frequency of a downstream signal; determining a target value of the first operation parameter of the first laser based on: a predetermined deviation between the target value and the reference value, and the reference value of the first operation parameter; configuring the first operation parameter of the first laser to be the target value, thereby the emission frequency of the first laser is aligned to a predetermined frequency for an upstream signal; transmitting upstream signals to the OLT by modulating the output of the first laser.

According to a fourth aspect of the invention, there is provided an apparatus comprising at least one processor and at least one memory including computer program code, the at least one memory and the computer program code configured to with the at least one processor, cause the apparatus at least to perform: configuring a first operation parameter of a first laser to be a reference value, thereby the emission frequency of the first laser is aligned to a frequency of a downstream signal; determining a target value of the first operation parameter of the first laser based on: a predetermined deviation between the target value and the reference value, and the reference value of the first operation parameter; configuring the first operation parameter of the first laser to be the target value, thereby the emission frequency of the first laser is aligned to a predetermined frequency for an upstream signal; transmitting upstream signals to the OLT by modulating the output of the first laser.

According to a fifth aspect of the invention, there is provided a non-transitory computer readable medium comprising program instructions for causing an apparatus to perform at least the following: configuring a first operation parameter of a first laser to be a reference value, thereby the emission frequency of the first laser is aligned to a frequency of a downstream signal; determining a target value of the first operation parameter of the first laser based on: a predetermined deviation between the target value and the reference value, and the reference value of the first operation parameter; configuring the first operation parameter of the first laser to be the target value, thereby the emission frequency of the first laser is aligned to a predetermined frequency for an upstream signal; transmitting upstream signals to the OLT by modulating the output of the first laser.

According to a sixth aspect of the invention, there is provided a computer readable medium comprising program instructions for causing an apparatus to perform at least the following: configuring a first operation parameter of a first laser to be a reference value, thereby the emission frequency of the first laser is aligned to a frequency of a downstream signal; determining a target value of the first operation parameter of the first laser based on: a predetermined deviation between the target value and the reference value, and the reference value of the first operation parameter; configuring the first operation parameter of the first laser to be the target value, thereby the emission frequency of the first laser is aligned to a predetermined frequency for an upstream signal; transmitting upstream signals to the OLT by modulating the output of the first laser.

According to the example embodiments, wavelength of Tx lasers at the coherent transceiver is aligned to the predetermined frequency for an upstream signal. The alignment can be done within short time and is only necessary upon initialization or when wavelength alignment is lost. With minor time consumption, it is possible to implement a coherent receiver with low-cost uncalibrated lasers instead of high cost tunable, pre-calibrated LO lasers. The laser chip cost of a coherent receiver can be significantly reduced. Using uncalibrated lasers allows to reduce the non-scaling TRx cost associated with calibrating modules after fabrication.

### Brief description of the figures

For a more complete understanding of example embodiments of the present invention, reference is now made to the following descriptions taken in connection with the accompanying drawings in which:
Figure 1 shows a schematic block diagram of a P2P communication system implementing IQM and coherent reception;
Figure 2 shows a schematic diagram of an example adaption of the P2P communication system in Figure 1 to Point to Multipoint (P2MP) system;
Figure 3 shows a schematic diagram of a further example adaption of the P2P communication system in Figure 1 to P2MP system;
Figures 4a-4c show schematic diagrams showing the upstream bursts from different ONUs in time domain and in the frequency domain;
Figure 5 shows a schematic block diagram of a part of a coherent TRx at an ONU according to an embodiment;
Figure 6 shows an example curve of the obtained electrical power of the monitor signal as a function of the temperature of the first laser;
Figure 7 shows a schematic block diagram of a part of another coherent TRx at an ONU according to another embodiment;
Figure 8 shows an example curve of the obtained electrical power of the output signal of the band-pass filter as a function of the temperature of the laser;
Figure 9 shows a flow diagram according to example methods implementing various embodiments;
Figure 10 shows an example block diagram of an apparatus 201 operating in accordance with various embodiment

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

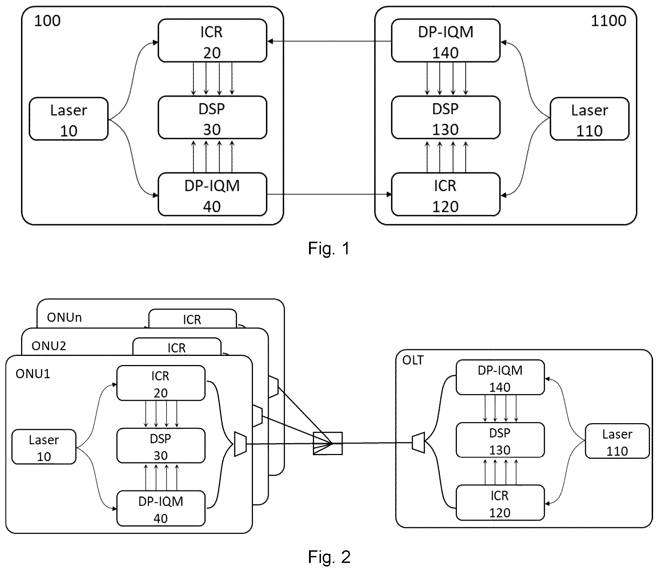

Figure 1 shows a schematic block diagram of a P2P communication system implementing IQM and coherent-reception.

As shown in Figure 1, both sides of the system are configured with similar coherent TRx. A dual-fiber system is used, with each fiber dedicated to communication signals in a respective direction.

In the following, the coherent TRx will be described with respect to the coherent TRx 100 on the left side of Figure 1.

Specifically, a frequency stable laser 10 which emits at *f*_{Tx,Rx} is used for both transmission and reception. In one example, transmitter may use 70% of the optical power and receiver use 30% as LO. In the example shown in Figure 1, both transmit and receive signals are at the same wavelength.

In the example of Figure 1, the Digital signal processing (DSP) unit 30 may implement both TX DSP and RX DSP functions. More specifically, for transmission, DSP 30 and Dual-polarization in-phase quadrature modulators DP-IQM 40 may be implemented to modulate the output signal of the laser 10. For example, the DSP 30 may perform a pre-processing of the digital data such as Forward Error Correction (FEC) encoding, symbol mapping, pre-compensation of channel impairments, and spectral shaping of the transmit signals. A digital analog converter (DAC) (not shown) may convert the digital signals to corresponding voltages and/or currents that are fed to the DP-IQM 40 to modulate the amplitude, phase and polarization of the optical carrier generated by the laser 10, the modulated signal is then transmitted over the fiber. A skilled person should know various ways of implementing IQM, thus it will not be elaborated here further in detail.

For reception at the coherent TRx 100, an Integrated Coherent Receiver (ICR) 20 may mix the received signal with the output of the local reference laser 10 to detect the phase and amplitude modulation. The DSP unit 30 may perform demodulation, symbol de-mapping and decoding, which may include steps such as compensation of clock, frequency, and phase offsets between the transmitter and receiver, or receiver-side equalization, etc.

A skilled person should understand that only part of the coherent TRx 100 is shown in Figure 1, the coherent TRx 100 may comprise further function blocks, such as transimpedance amplifiers (TIAs) and analog digital converters (ADCs) etc.

Figure 2 shows a schematic diagram of an example adaption of the P2P communication system in Figure 1 to Point to Multipoint (P2MP) system.

In the example shown in Figure 2, the P2MP system is based on single-fiber bi-directional system, to ensure compatibility with existing fiber access networks. The conventional coherent TRx can be adopted to operate in a P2MP system with few changes, for example, employing an optical circulator, modified DSP etc. As a single stable laser is used at both sides, there is no issue with the wavelength alignment between the Tx and the local oscillator laser. However, the bidirectional operation at the same wavelength will be limited by the Rayleigh scattering and back reflection.

Therefore, the conventional coherent TRx cannot be directly adopted in a PON system.

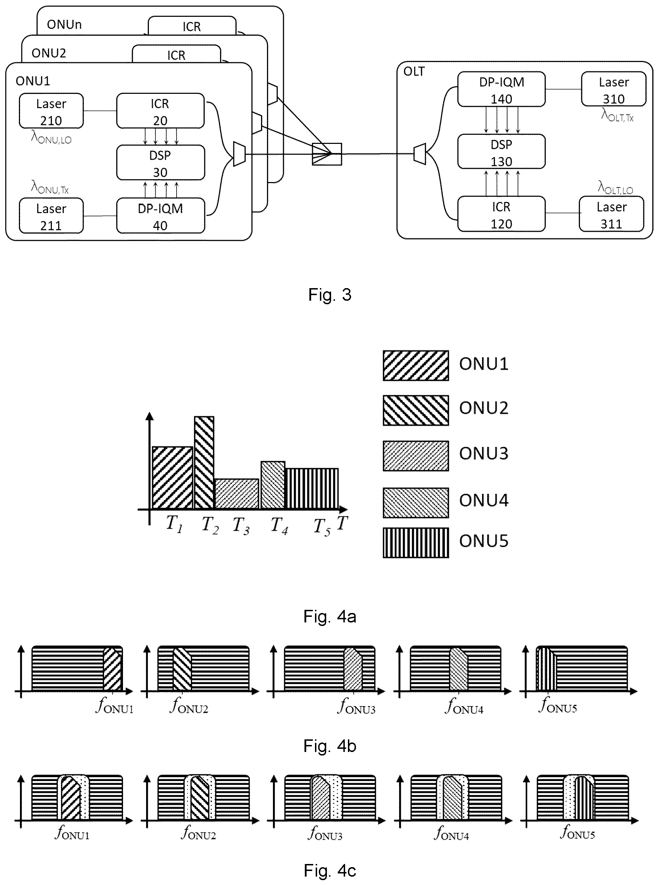

Figure 3 shows a schematic diagram of a further example adaption of the P2P communication system in Figure 1 to P2MP system.

In the example shown in Figure 3, the ONUs may apply dual-laser based TRx design to avoid Rayleigh scattering and back reflection. Specifically, two lasers with different wavelengths are used respectively for upstream and downstream operation. In one example, the lasers may be ECL.

More specifically, in the example shown in Figure 3, on the ONU side, laser 210 emits at λ_{ONU,LO}, and is used as LO for downstream reception. Laser 211 emits at λ_{ONU,Tx}, and is used for upstream transmission. On the OLT side, laser 310 emits at λ_{OLT,Tx}, and is used for downstream transmission. Laser 311 emits at λ_{OLT,LO}, and is used as LO for upstream reception. For proper reception at the ONU, λ_{ONU,LO} should be aligned to the frequency of the downstream signal, i.e. λ_{OLT,Tx}, and for proper reception at the OLT, λ_{ONU,TX} should be aligned to the frequency of the upstream signal i.e. λ_{OLT,LO}. The difference between the upstream frequency and the downstream frequency maybe predetermined and indicated or communicated to the respective ONUs.

A skilled person should understand that the emission frequency of the laser 210 λ_{ONU,LO} being aligned to the frequency of the downstream signal means the emission frequency of the laser is same as or close to the frequency of the downstream signal. Similarly, the emission frequency of the laser 211 λ_{ONU,Tx} being aligned to the frequency of the upstream signal means the emission frequency of the TX laser is same as or close to the LO frequency at the OLT, namely the predefined frequency of the upstream signal. In other words, it means that the offset between the emission frequency of the laser 210/211 and the frequency of the downstream signal/upstream signal is lower than or not higher than a predetermined value. The predetermined value may be related to various factors, for example the sensitivity and algorithms for example frequency offset estimation algorithm adopted by the corresponding DSP unit. In one example, the predetermined value may correspond to the highest frequency offset that the frequency offset estimation algorithm adopted by the DSP could determine.

It is desired to reduce the cost of the Coh-TRx for PON for example by employing uncalibrated fixed-wavelength lasers, such as distributed feedback (DFB) laser on the ONU side to replace the fully calibrated lasers such as ECL.

However, as the ONU lasers are uncalibrated, they may suffer from wavelength inaccuracies due to manufacturing tolerances. Simply replacing the fully calibrated lasers in the example shown in Figure 3 with uncalibrated lasers would introduce a wavelength alignment problem which will be elaborated below with respect to Figures 4a-4c.

Figure 4a- 4c show schematic diagrams showing the upstream bursts from different ONUs in time domain and in the frequency domain.

Figure 4a shows the upstream bursts from different ONUs in time domain. Specifically, different patterns represent upstream signals coming from different ONUs, ONU1, ONU2, ..., ONU5.

Figure 4b shows the optical spectrum of the upstream signals without specially configuring the operation parameter of the respective Tx laser.

As shown in the Figure 4b, the different upstream bursts from different ONUs are centered at different frequencies because of the wavelength / frequency uncertainty of the ONU lasers. With uncalibrated lasers, but without Tx-laser alignment and locking, the spectrum of the upstream signals may be anywhere within in a wavelength-band Δλ_{emit,uncal} or a frequency band Δf marked with horizontal stripes. The wavelength or frequency band can be used interchangeablely.

For example, for a distributed feedback, DFB, laser, it is not possible to ensure the exact emission frequency/wavelength of such an uncalibrated laser. Typically, it may emit in a certain frequency / wavelength band Δf / Δλ (e.g., 500 GHz/± 2 nm) in room temperature (e.g., T = 25°C) due to fabrication / process-line inaccuracy.

However, the wavelength-band Δf marked with horizontal stripes is so wide that the offset between the frequency of the respective Tx laser and the predetermined frequency for upstream signals may be bigger than a predetermined threshold. In such case, the DSP at the OLT may not be able to compensate the frequency offset, and thus the proper upstream reception would not be possible.

Thus, various embodiments are implemented to align the emission frequency of the Tx laser at an ONU to a predetermined frequency for an upstream signal, in order to ensure proper reception.

Figure 4c shows the optical spectra of the upstream signals transmitted by ONUs implementing various embodiments.

As shown in Figure 4c, the spectra of the upstream signals are placed within a defined band marked with dotted pattern in this figure, which is much narrower than the wavelength-band Δf marked with horizontal stripes in Figure 4b. Thus, the residual offset can be compensated either by DSP or by feedback from the OLT via PLOAM, or a combination of both.

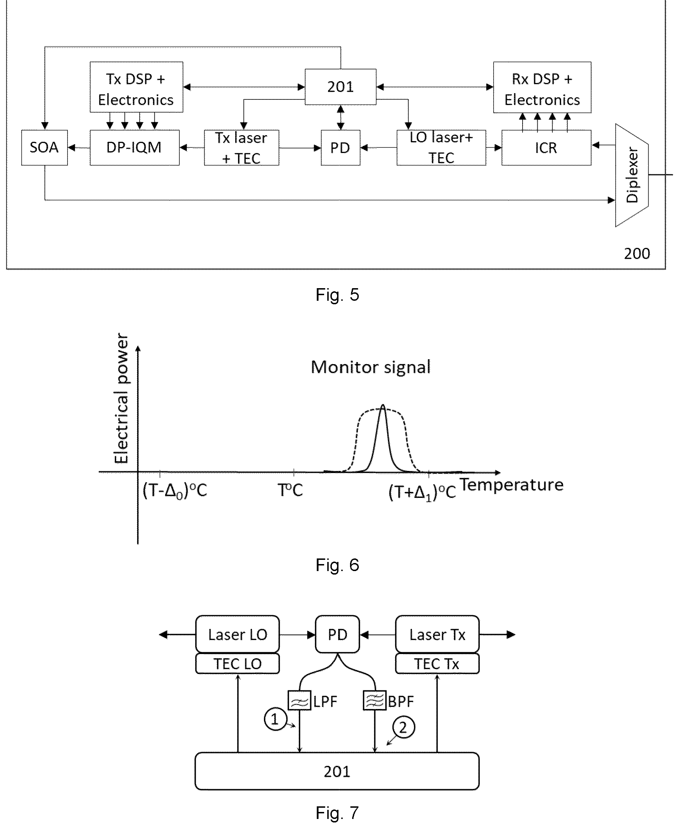

Figure 5 shows a schematic block diagram of a part of a coherent TRx at an ONU according to an embodiment.

In the embodiment shown in Figure 5, the coherent TRx 200 comprises a first laser, Tx laser, for upstream transmission, and a second laser, LO laser, for downstream reception. A dual wavelength based TRx design allows to avoid the issues of Rayleigh scattering and back reflection.

In one embodiment, both of the first laser, Tx laser, and the second laser, LO laser, are uncalibrated in terms of the relationship between the operation parameter and the emission frequency of the laser, for example they may be implemented as DFB lasers. In another example, only the first laser is uncalibrated and the second laser may be for example an ECL. The first laser is suitable to be used as a LO laser and a Tx laser for the coherent optical TRx in an ONU. Namely, both the downstream frequency band and the upstream frequency band fall in the emission frequency range of the first laser, which is achievable by adjusting at least one operation parameter of the first laser.

In this embodiment, OLT side employs fully tunable and calibrated lasers. These lasers may operate in a specific wavelength / frequency with high accuracy (e.g. ±1-2GHz). The operational frequencies are pre-defined, e.g., f_{OLT,Tx} will be used for downstream transmitter and f_{OLT,LO} will be used in upstream operation as an LO. The difference between Tx- and LO-frequency Δf is predetermined.

As indicated by the arrows from the apparatus 201 to the Tx laser and from the apparatus 201 to the LO laser, the apparatus 201 may be configured to adjust a first operation parameter of the first laser Tx and/or a second operation parameter of the second laser LO, thereby adjusting the emission frequency of the first laser Tx and or the second laser LO.

Specifically, the first operation parameter and the second operation parameter may be same or different and may comprises a temperature of the respective laser and/or a bias current of the respective laser Various means may be implemented to adjust the temperature of the respective laser and/or the bias current of the respective laser. In the example shown in Figure 5, the temperature of the first laser and/or the second laser may be adjusted by a current of a thermoelectric cooler, TEC. In another example, the temperature of the first laser and/or the second laser may be adjusted by a voltage applied to a thermal heater cointegrated with the respective laser.

In the example shown in Figure 5, the coherent TRx 200 further comprises means for diplexing the downstream signal and the upstream signal. Furthermore, for upstream transmission, the coherent TRx 200 further comprises means for implementing Tx DSP and DP-IQM, the function of which may be similar as those described with respect to Figures 1-3 and will not be repeated here. Similarly, for downstream reception, the coherent TRx 200 further comprises means for implementing Rx DSP and ICR. The coherent TRx 200 may further comprises electronics (not shown) for the proper operation of the coherent TRx 200. The coherent TRx 200 may also contain an optical amplifier, like a semiconductor optical amplifier (SOA) or an Erbium-doped optical fiber amplifier (EDFA) to increase the optical power of the upstream signal.

In a coherent PON scenario, the OLT broadcasts the downstream signal to multiple ONUs. Therefore, the ONUs can use the downstream signal as a refence and align the second laser, LO laser, to the downstream signal for example using the method as disclosed in EP24182346.7.

Specifically, the apparatus 201 may be configured to configure a second operation parameter of the second laser, LO laser, thereby the emission frequency of the second laser is aligned to the frequency of the downstream signal.

Various embodiments may be implemented to use the downstream frequency as a reference and to align the first laser, Tx laser, to a predetermined frequency of an upstream signal as well.

In the example show in Figure 5, the apparatus 201 according to various embodiments may be implemented in the ONU 200. In another example, the apparatus 201 may also be implemented outside the ONU 200 and communicatively connected to the ONU 200.

The apparatus 201 is configured to configure a first operation parameter of the first laser Tx to be a reference value T_{Tx,ref}, thereby the emission frequency of the first laser Tx is aligned to a frequency of a downstream signal.

A skilled person should understand that the emission frequency of the first laser Tx being aligned to the frequency of the downstream signal means that the emission frequency of the first laser is same as or close to the frequency of the downstream signal. In other words, it means that the offset between the emission frequency of the first laser Tx and the frequency of the downstream signal is lower than or not higher than a predetermined value. The predetermined value may be related to various factors, for example the sensitivity and algorithms, for example frequency offset estimation algorithm adopted by a corresponding DSP unit. In one example, the predetermined value may correspond to the highest frequency offset that the frequency offset estimation algorithm adopted by the DSP could determine

There are various ways to determine the reference value T_{Tx,ref}. In one example the reference value T_{Tx,ref} can be determined as the value that brings the emission frequency of the first laser Tx closest to a reference signal. Specifically, the emission frequency of the second laser or the downstream signal may be used as the reference signal.

Specifically, in one embodiment, the apparatus 201 may be configured to obtain an indication of an electrical power and/or frequency of a monitor signal while adjusting the first operation parameter.

In the embodiment shown in Figure 5, the monitor signal comprises at least a part of the emission frequency of the first laser Tx and at least a part of the emission frequency of the second laser LO. Specifically, in one example, the monitor signal may comprise 1% power of output of the first laser and 1% power of output of the second laser. An optical power splitter e.g., 99/1% may be used for this purpose. In another example, the monitor signal may comprise at least a part of the emission frequency of the first laser TX and at least part of the downstream signal.

More specifically, the monitor signal may be provided to a photo diode, and the apparatus 201 may be configured to obtain the indication of the electrical power and/or the frequency from the photo diode.

Instead of using optical power splitter, the semitransparent back-mirror of the DFB lasers may be used instead. The semitransparent back-mirrors may be connected to the monitor photo diode by using an optical waveguide (in case of heterogeneously integrated lasers) or this can be realized in optical butt-coupling technique. In this embodiment, both lasers can be fabricated and realized in one photonic integrated circuit (PIC). The thermal coupling is also taken in account.

The apparatus 201 may be further configured to determine the reference value T_{Tx,ref} of the first operation parameter of the first laser, Tx laser, based on a relationship between the obtained indication of the electrical power and/or frequency and the corresponding first operation parameter.

Specifically, a correspondence between the electrical power and/or frequency of the monitor signal and the adjusted operation parameter may be established while the operation parameter is adjusted.

Figure 6 shows an example curve of the obtained electrical power of the monitor signal as a function of the temperature of the first laser, Tx laser.

In Figure 6, the vertical axis shows the obtained electrical power of the monitor signal, and the horizontal axis represents the temperature of the first laser Tx laser.

In practice, the temperature may be represented for example by the current provided to the TEC or voltage applied to the thermal heater.

In one example, the apparatus 201 may adjust the temperature of the first laser in steps of 0.01°C so that the frequency of the first laser is swept from f₀ to f₁. The depth of the steps is given merely as an example, it may have different value. Specifically, the apparatus 201 may adjust the current provided to the TEC or voltage applied to the thermal heater to achieve similar result.

In the example of Figure 6, the initial temperature of the laser may be T°C. The emission frequency of the first laser may be f₀ at the temperature of (T-Δ₀)°C, and the emission frequency of the first laser may be f₁ at the temperature of (T+Δ₁)°C. The parameters Δ₀ and Δ₁ may have same or different values. The sweeping of the frequency may be implemented in any direction. For example, the temperature of the first laser may be adjusted from (T-Δ₀)°C to (T+Δ₁)°C, or from (T+Δ₁)°C to (T-Δ₀)°C. It is also possible that the sweeping of frequency is carried out partly. For example, the temperature of the first laser may be adjusted from T°C first to (T-Δ₀)°C or from T°C to (T+Δ₁)°C. If the indication of the electrical power shows that the electrical power of the monitor signal is higher than a predetermined threshold, then the apparatus 201 may not sweep the rest part, namely from T°C to (T+Δ₁)°C or from T°C first to (T-Δ₀)°C.

As shown by the solid curve in Figure 6, for low bandwidth receiver, a peak can be observed in the electrical power of the monitor signal.

Meanwhile, as shown by the dashed curve in Figure 6, for high bandwidth receiver, a plateau can be observed in the received electrical power.

There is also a dependency on the reference signal: a broader peak is expected when the downstream signal is used as reference signal instead of the LO laser.

The apparatus 201 may be further configured to determine a maximum or a maximum range of the electrical power of the monitor signal; and to determine a value of the first operation parameter corresponding to the maximum or the maximum range of the electrical power as the reference value T_{Tx,ref}.

Specifically, an optimization method for example Golden section search or Fibonacci search may be applied to find out the maximum range of the electrical power and its corresponding temperature. The temperature range corresponding to the maximum or maximum range of the electrical power may be determined as the reference value T_{Tx,ref}. For high bandwidth receiver, a skilled person should know various ways to find the middle of the plateau and then determine the first target range similarly as described with respect to low bandwidth receiver.

In the example shown in Figures 5, the monitor signal uses the output signal of the second laser as the reference signal. The reference value T_{Tx,ref} of the first operation parameter may be determined as the value that makes the emission frequency of the first laser Tx aligned to the emission frequency of the second laser LO. Since the emission frequency of the second laser LO is also aligned to the downstream frequency, configuring the first operation parameter of the first laser, Tx laser, to be the reference value T_{Tx,ref} also makes the emission frequency of the first laser being aligned to the frequency of the downstream signal.

In another example, the monitor signal may use at least part of the downstream signal as the reference signal. The reference value T_{Tx,ref} of the first operation parameter may be determined as the value that makes the emission frequency of the first laser Tx aligned to the frequency of the downstream signal. Configuring the first operation parameter of the first laser, Tx laser to be the reference value T_{Tx,ref}, make the emission frequency of the first laser being aligned to the frequency of the downstream signal.

The lasers may come from different fabrication process and can be in different optical chips. The uncertainty / ambiguity can be reduced using following approaches: Using a narrow low-pass filter at the output of the photo diode, this can be a digital or analog filter. For example, as shown in Figure 7, which will be explained later in detail, It is also possible to employ a digital FFT to extract the frequency difference (if the difference is within the bandwidth of the PD) to realize more accurate alignment.

The frequency of the monitor signal is the difference of the emission frequency of the first laser and the reference. In one example, the temperature which makes the frequency of the monitor signal become zero may be determined as the reference value T_{Tx,ref}.

The apparatus 201 is further configured to determine a target value T_{Tx} of the first operation parameter of the first laser Tx laser based on: a predetermined deviation ΔT_{Tx}=T₁ₓ-T_{Tx,ref} between the target value T_{Tx} and the reference value T_{Tx,rer}, and the reference value of the first operation parameter T_{Tx,ref}. Specifically, T_{Tx} = T_{Tx,ref} +ΔT_{Tx}. The target value is not necessarily higher than the reference value, thus the deviation may have positive or negative value.

In one example, the deviation ΔT_{Tx}=T_{Tx}-T_{Tx,ref} can pre-calibrated in the factory and hardcoded in the device firmware. In another example, the deviation may be determined by the OLT and communicated to the ONU and provided to the apparatus 201. In yet another example, the deviation can be determined by the apparatus 201 or another function block in the ONU and provided to the apparatus 201.

In one embodiment, the apparatus 201 may be further configured to determine the deviation ΔT_{Tx}=T_{Tx}-T_{Tx,ref} between the target value T_{Tx} and the reference value T_{Tx,ref} based on: a predetermined relation between the emission frequency of the first laser Tx and the first operation parameter; and a predetermined difference between the frequency of the downstream signal and the predetermined frequency for the upstream signal.

Specifically, the predetermined difference Δf=fᵤₚ-f_{down} between the frequency of the downstream signal f_{down} and the predetermined frequency of the upstream signal f_{down} may be pre-stored in the ONU or determined at the OLT and communicated to the respective ONU and subsequently provided to the apparatus 201.

Furthermore, the predetermined relation may be a characteristic R of the first laser Tx, wherein the characteristic R indicates a ratio Δλ/°C between a variation of the first operation parameter and a variation in the emission frequency of the first laser, Tx laser. In one example, the predetermined relation may be predefined from the factory and stored for example in the ONU and provided to the apparatus 201. In another example, the relation R may be determined by another function block in the ONU and provided to the apparatus 201. A skilled person should know various methods that may be implemented to determine the relation R.

Figure 7 shows a schematic block diagram of a part of another coherent TRx at an ONU according to another embodiment.

In the example of Figure 7, the apparatus 201 may also be configured to determine the relation R between the emission frequency of the first laser and the first operation parameter. In Figure 7, only part of the coherent TRx is shown.

In the example shown in Figure 7, a low path filter may be configured on a first branch 1 at the output of the photo diode which is configured to receive the monitor signal. While sweeping the temperature of the RX laser, a curve as shown in Figure 6 may be obtained. The temperature of the first laser may be configured to be the reference value T_{Tx,ref}, which maximizes the electrical power on the first branch 1.

Meanwhile, a band-pass filter centered at a known frequency fn, for example 5GHz, may be configured on a second branch 2 to filter at least part of the output of the photo diode. In another example, a notch filter may be used instead of the band-pass filter.

Specifically, in the example shown in Figure 7, after the emission frequency of the first laser is aligned to the frequency of the LO laser as described above, the apparatus 201 or another function block in the ONU may be configured to slowly add a minor temperature change and simultaneously measure the electric power at the output of the band-pass or notch-filter. A correspondence between the electrical power of the signal at the output of the filter and the adjusted temperature may be established while the temperature is adjusted.

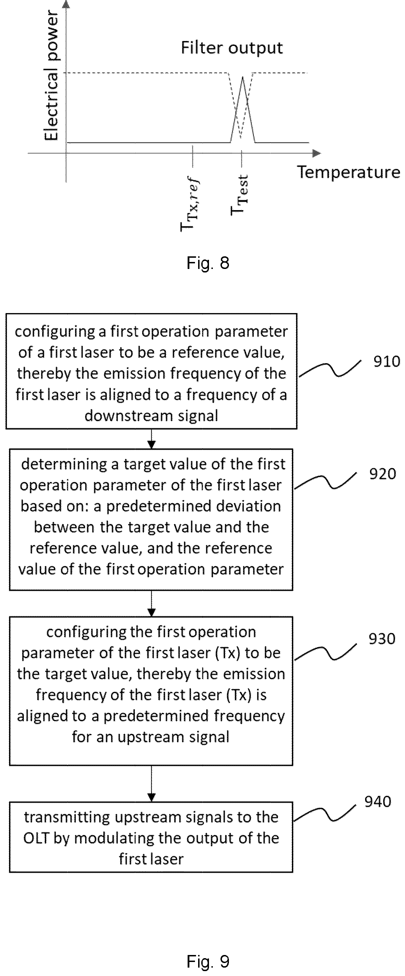

Figure 8 shows example curves of the obtained electrical power of the output signal of the filter as a function of the temperature of the laser.

Specifically, the solid curve in Figure 8 shows the curve obtained at the output signal of the band-pass filter while sweeping the temperature of the laser. The dashed curve in Figure 8 shows the curve obtained at the output signal of the band-stop filter while sweeping the temperature of the laser.

As indicated by the solid curve in Figure 8, the temperature T_{Test} of the first laser may be determined as the temperature at which the electric power of the output of the band-pass filter is maximized.

As shown by the dashed curve in Figure 8, if a band stop filter is used on the branch 2 in Figure 7, the temperature T_{Test} of the first laser may be determined as the temperature at which the electric power of the output of the band-stop filter is minimized.

In one example, the relation R can be estimated based on frequency characteristic of the filter, for example fn and ΔT_{Test} = T_{Test} - T_{Tx, ref}. Specifically, R=Δλ/°C=f_{LO}-fn/ ΔT_{Test}.

The apparatus 201 is further configured to configure the first operation parameter of the first laser Tx to be the target value, thereby the emission frequency of the first laser Tx is aligned to a predetermined frequency for an upstream signal. The ONU activation may be initiated afterwards.

A skilled person should understand that the emission frequency of the first laser Tx being aligned to the predetermined frequency for an upstream signal means that the emission frequency of the first laser is same as or close to the predetermined frequency for the upstream signals. In other words, it means that the offset between the emission frequency of the first laser Tx and the frequency of the predetermined frequency for the upstream signals is lower than or not higher than a predetermined value. The predetermined value may be related to various factors, for example the sensitivity and algorithms, for example frequency offset estimation algorithm adopted by the DSP unit at the OLT. In one example, the predetermined value may correspond to the highest frequency offset that the frequency offset estimation algorithm adopted by the DSP could determine.

The procedure described above may be referred to as Tx frequency alignment below. In one example, the Tx frequency alignment may be repeated every time when the ONU needs to be activated. The value of the reference value T_{Tx,ref} and the determined target value T_{Tx} are not necessarily same every time when Tx frequency alignment is repeated. They may respectively fall within a range ensuring the alignment to the respective frequency.

The apparatus 201 may be further configured to transmit upstream signals to the OLT by modulating the output of the first laser TX, for example after activation.

The "ONU activation process" of an ONU receiver based on IM/DD technique is explained in the ITU-T document of G.987.3 section 12. The activation process of an ONU is defined as follows 01: Initial state, 02: Serial Number state, 03: Ranging state, 04: Operation state, 05: Intermittent LODS state, 06: Emergency Stop state.

For a coherent ONU, the Tx frequency alignment described above may be performed prior to the initial state.

The apparatus 201 may be further configured to receive a feedback from the OLT; and to adjust the first operation parameter based on the feedback from the OLT.

The OLT may allow additional margin in terms of receiver bandwidth and receiver DSP tolerance (e.g., ±4-5GHz offset). The residual frequency offset can be compensated in the DSP or the residual frequency offset can be reduced using feedback signal from the OLT through a dedicated channel, e.g. PLOAM.

A skilled person should know various ways of adjusting the first operation parameter based on the feedback from the OLT. For example, the apparatus 201 may change the temperature and/or bias current of the first laser Tx based on the estimated frequency offset information received from the OLT. The adjustment of the first operation parameter based on feedback from the OLT may be referred as fine tuning in the present disclosure.

In one embodiment, the feedback from the OLT comprises at least one of: estimated frequency offset, EFO, bit error ratio, BER, error vector magnitude, EVM, and forward error correction errors per codeword, FEC-EPC.

In the embodiment described above, the function of fine tuning may be implemented in the apparatus 201. In other examples, the function of fine tuning may be implemented outside the apparatus 201, for example by another fine control circuit (not shown) in the ONU.

In one example, the apparatus 201 may further determine whether the emission frequency of the first laser is still aligned with the predetermined frequency for the upstream signals based on the feedback from the OLT. Upon determining the emission frequency of the first laser has lost alignment with the predetermined frequency for the upstream signals, the apparatus 201 may repeat the procedure as described above to align the emission frequency of the first laser with the frequency of the predetermined frequency for the upstream signals.

In one embodiment, the apparatus 201 may further perform an initial state of an ONU activation process as defined in the standard, after the first operation parameter is configured to be target value.

Figure 9 shows a flow diagram according to example methods implementing various embodiments.

In the example of Figure 9, all method steps are implemented in the apparatus 201 inside the coherent transceiver in the ONU. Alternatively, some of the method steps may be implemented by the ONU and some of the method steps may be implemented for example in the apparatus 201 outside the ONU and communicatively connected to the ONU.

In Figure 9, in step S910, a first operation parameter of a first laser Tx is configured to be a reference value T_{Tx,ref}, thereby the emission frequency of the first laser Tx is aligned to a frequency of a downstream signal.

In step S920, a target value T_{Tx} of the first operation parameter of the first laser (Tx) is determined based on: a predetermined deviation ΔT_{Tx}=T_{Tx}-T_{Tx,ref} between the target value T_{Tx} and the reference value T_{Tx,ref}, and the reference value of the first operation parameter T_{Tx,ref}.

In step S930, the first operation parameter of the first laser Tx is configured to be the target value, thereby the emission frequency of the first laser Tx is aligned to a predetermined frequency for an upstream signal;

In step S940, upstream signals are transmitted to the OLT by modulating the output of the first laser Tx.

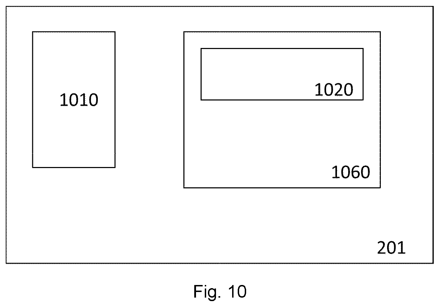

Figure 10 shows an example block diagram of an apparatus 201 operating in accordance with various embodiment.

The apparatus 201 includes a processor 1010 and a memory 1060. In other examples, the apparatus 201 may comprise multiple processors.

In the example of Figure 10, the processor 1010 is a control unit operatively connected to read from and write to the memory 1060. The processor 1010 may also be configured to receive control signals received via an input interface and/or the processor 1010 may be configured to output control signals via an output interface. In an example embodiment the processor 1010 may be configured to convert the received control signals into appropriate commands for controlling functionalities of the apparatus.

The memory 1060 stores computer program instructions 1020 which when loaded into the processor 1010 control the operation of the apparatus 201 as explained above. In other examples, the apparatus 201 may comprise more than one memory 1060 or different kinds of storage devices.

Computer program instructions 1020 for enabling implementations of example embodiments of the invention or a part of such computer program instructions may be loaded onto the apparatus 201 by the manufacturer of the apparatus, by a user of the apparatus, or by the apparatus itself based on a download program, or the instructions can be pushed to the apparatus by an external device. The computer program instructions may arrive at the apparatus via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 201 comprises means, wherein the means comprises at least one processor 1010, at least one memory 1060 including computer program code 1020, the at least one memory 1060 and the computer program code 1020 configured to, with the at least one processor 1010, cause the performance of the apparatus 201.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 10. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

It will be obvious to a person skilled in the art that, as the technology advances, the inventive concept can be implemented in various ways. The invention and its embodiments are not limited to the examples described above but may vary within the scope of the claims.

## Claims

1. An apparatus (201) for use by an optical network unit, ONU, communicatively connected to an Optical Line Terminal, OLT, comprising means for:
- configuring a first operation parameter of a first laser (Tx) to be a reference value (T_{Tx,ref}), thereby the emission frequency of the first laser (Tx) is aligned to a frequency of a downstream signal;
- determining a target value (T_{Tx}) of the first operation parameter of the first laser (Tx) based on: a predetermined deviation (ΔT_{Tx}=T_{Tx}-T_{Tx,ref}) between the target value (T_{Tx}) and the reference value (T_{Tx,ref}), and the reference value of the first operation parameter (T_{Tx,ref});
- configuring the first operation parameter of the first laser (Tx) to be the target value, thereby the emission frequency of the first laser (Tx) is aligned to a predetermined frequency for an upstream signal;
- transmitting upstream signals to the OLT by modulating the output of the first laser (Tx).

2. The apparatus (201) according to claim 1, wherein the means are further configured for:
- determining the deviation (ΔT_{Tx}=T_{Tx}-T_{Tx,ref}) between the target value (T_{Tx}) and the reference value (T_{Tx,ref}) based on:
a predetermined relation (R) between the emission frequency of the first laser (TX) and the first operation parameter; and
a predetermined difference between the frequency of the downstream signal and the predetermined frequency of the upstream signal.

3. The apparatus (201) according to any preceding claim, wherein the means are further configured for:
- receiving the predetermined deviation (ΔT_{Tx}=T_{Tx}-T_{Tx,ref}) or the predetermined difference from the OLT.

4. The apparatus (201) according to claim 2, wherein the means are further configured for:
- determining the relation (R) between the emission frequency of the first laser (Tx) and the first operation parameter.

5. The apparatus (201) according to any preceding claim, wherein the means are further configured for:
- configuring a second operation parameter of a second laser (LO) configured for downstream reception, thereby the emission frequency of the second laser (LO) is aligned to the frequency of the downstream signal;
- determining the reference value (T_{Tx,ref}) as a value that makes the emission frequency of the first laser (Tx) aligned to emission frequency of the second laser (LO).

6. The apparatus (201) according to any preceding claim, wherein the means are further configured for:
- adjusting the first operation parameter of the first laser (TX), thereby adjusting the emission frequency of the first laser (TX),
- obtaining an indication of an electrical power and/or frequency of a monitor signal while adjusting the first operation parameter, wherein the monitor signal comprises:
∘ at least a part of the emission frequency of the first laser (TX), and
∘ at least part of the downstream signal and/or at least a part of the emission frequency of the second laser (LO);
- determining the reference value (T_{Tx,ref}) of the first operation parameter of the first laser (Tx) based on a relationship between the obtained indication of the electrical power and/or frequency and the corresponding first operation parameter.

7. The apparatus (201) according to the preceding claim, wherein the means are further configured for:
- obtaining the indication of the electrical power and/or the frequency from a photo diode into which the monitor signal is provided.

8. The apparatus (201) according to any of claims 6-7, wherein the means are further configured for:
- determining a maximum or a maximum range of the electrical power of the monitor signal;
- determining a value of the first operation parameter corresponding to the maximum or the maximum range of the electrical power as the reference value (T_{Tx,ref}).

9. The apparatus (201) according to the preceding claim, wherein the means are further configured for:
- receiving a feedback from the OLT;
- adjusting the first operation parameter based on the feedback from the OLT.

10. The apparatus (201) according to the preceding claim, wherein the feedback from the OLT comprises at least one of:
estimated frequency offset, EFO;
bit error ratio, BER;
error vector magnitude, EVM; and
forward error correction errors per codeword, FEC-EPC.

11. The apparatus (201) according to any preceding claim, wherein the first operation parameter comprises a temperature of the laser and/or a bias current of the laser.

12. The apparatus (201) according to the preceding claim, wherein first operation parameter is the temperature of the first laser, and wherein the means are further configured for:
- adjusting the temperature of the first laser by adjusting a current of a thermoelectric cooler, TEC, or by adjusting a voltage applied to a thermal heater cointegrated with the first laser (Tx).

13. The apparatus (201) according to any preceding claim, wherein the apparatus is suitable for use by a coherent transceiver in the ONU.

14. A method, comprising:
- configuring a first operation parameter of a first laser (Tx) to be a reference value (T_{Tx,ref}), thereby the emission frequency of the first laser (Tx) is aligned to a frequency of a downstream signal;
- determining a target value (T_{Tx}) of the first operation parameter of the first laser (Tx) based on: a predetermined deviation (ΔT_{Tx}=T_{Tx}-T_{Tx,ref}) between the target value (T_{Tx}) and the reference value (T_{Tx,ref}), and the reference value of the first operation parameter (T_{Tx,ref});
- configuring the first operation parameter of the first laser (Tx) to be the target value, thereby the emission frequency of the first laser (Tx) is aligned to a predetermined frequency for an upstream signal;
- transmitting upstream signals to the OLT by modulating the output of the first laser (TX).

15. A computer program comprising instructions for causing an apparatus to perform at least the following:
- configuring a first operation parameter of a first laser (Tx) to be a reference value (T_{Tx,ref}), thereby the emission frequency of the first laser (Tx) is aligned to a frequency of a downstream signal;
- determining a target value (T_{Tx}) of the first operation parameter of the first laser (Tx) based on: a predetermined deviation (ΔT_{Tx}=T_{Tx}-T_{Tx,ref}) between the target value (T_{Tx}) and the reference value (T_{Tx,ref}), and the reference value of the first operation parameter (T_{Tx,ref});
- configuring the first operation parameter of the first laser (Tx) to be the target value, thereby the emission frequency of the first laser (Tx) is aligned to a predetermined frequency for an upstream signal;
- transmitting upstream signals to the OLT by modulating the output of the first laser (TX).
